## Europäisches Patentamt
## European Patent Office
## Office européen des brevets

(11) Veröffentlichungsnummer: **0 511 949 B1**

# EUROPÄISCHE PATENTSCHRIFT

(45) Veröffentlichungstag der Patentschrift: **19.07.95**

(51) Int. Cl.6: **B61C 15/14**, //B60K7/00, B60L15/32

(21) Anmeldenummer: **92890069.5**

(22) Anmeldetag: **25.03.92**

(54) **Verfahren zur Steuerung eines Fahrwerkes ohne starre Achsverbindungen.**

(30) Priorität: **30.04.91 AT 904/91**

(43) Veröffentlichungstag der Anmeldung:
**04.11.92 Patentblatt 92/45**

(45) Bekanntmachung des Hinweises auf die Patenterteilung:
**19.07.95 Patentblatt 95/29**

(84) Benannte Vertragsstaaten:
**AT BE CH DE ES FR GB GR IT LI LU NL SE**

(56) Entgegenhaltungen:
**EP-A- 0 417 326**

**SOVIET PATENTS ABSTRACTS Section PO, Week 9019, Derwent Publications Ltd., London, GB; Class O21, AN 90-145846 & SU-A-1 493 520 (KHARKOV POLY)**

**SOVIET PATENTS ABSTRACTS Section PO, Week 8925, Derwent Publications Ltd., London, GB; Class O14, AN 89-184881 & SU-A-1 428 618 (LENGD RAIL TRANSP)**

**SOVIET PATENTS ABSTRACTS Section PO, Week 9102, Derwent Publications Ltd., London, GB; Class O14, AN 91-013681 & SU-A-1 544 609 (LENGD RAIL TRANSP)**

(73) Patentinhaber: **SGP Verkehrstechnik Gesellschaft m.b.H.**
**Brehmstrasse 16**
**A-1110 Wien (AT)**

(72) Erfinder: **Lenk, Leopold, Ing.**
**Zur Spinnerin 53/2/11**
**A-1100 Wien (AT)**

(74) Vertreter: **Köhler-Pavlik, Johann, Dipl.-Ing.**
**Margaretenplatz 5**
**A-1050 Wien (AT)**

**Beschreibung**

Die Erfindung betrifft ein Verfahren zur Steuerung eines Fahrwerkes ohne starre Achsverbindungen, bei welchem zumindest zwei einander gegenüberliegende Räder einzeln von separat ansteuerbaren Antriebseinheiten angetrieben werden.

Konventionelle Radsätze, bei welchen die Laufflächen beider Räder konisch ausgebildet sind und die Räder mit einer verdrehsteifen Achse miteinander verbunden sind, besitzen Selbstwendevermögen. Aufgrund der zentrierend auf den Radsatz einwirkenden Kräfte (Profil-Seitenkräfte) und der Kraftschluß-Längskräfte folgt dieser im Spurspielkanal einer sinusähnlichen Linie. Auf Grundlage der beispielsweise von Klingel & Heumann abgeleiteten Rad-Schiene-Gesetze ist die Weglänge der Radsatzinuslinie gegeben durch

$$L = 2\pi . \sqrt{\frac{r \cdot S}{2 \cdot \gamma}}$$

wobei L = Weglänge, r = Radhalbmesser, S = Spurmaß und
$\gamma$ = Radreifenneigung.
Die System-Erregerfrequenz ist durch die Formel

$$f = \frac{v}{3,6 \cdot L}$$

gegeben, wobei v = Fahrgeschwindigkeit in km/h und L = oben berechnete Weglänge der Radsatzsinuslinie (diese Formeln sind bis ca. 120 km/h gültig).

Da ein konventioneller Radsatz der oben beschriebenen sinusähnlichen Linie folgt, ist die Radabnützung der Laufflächen über das Spurkanalspiel verteilt und punktuelle Abnützungen (Rundlauffehler) sind hintangehalten. Überdies ist bekannterweise die Laufgüte (Wz-Wert) eines Schienenfahrzeuges von der Entkoppelung des Radsatzes zum Wagenkasten abhängig. Aufgrund der bekannten und genau definierten System-Erregerfrequenz kann daher die Federung derart ausgelegt werden, daß das System nicht in Resonanz gerät.

Bei speziellen Fahrwerken ohne starre Achsverbindung (Losradsysteme), welche beispielsweise bei dar Konstruktion von Niederflur-Fahrzeugen wesentliche Bedeutung erlangen, treten aufgrund der fehlenden starren Achsverbindung die beschriebenen zentrierend und selbstwendend wirkenden Kräfte nicht auf, sodaß eine zwangsweise Verteilung der Rundlauffehler über das Spurspiel nur durch mechanische Störfaktoren (Gleisfehler - äußere, vom Fahrzeug kommende Anregungen usw.) möglich ist. Ohne äußere Einwirkung wird das Rad-Schiene-System immer an der gleichen Stelle belastet. Durch Berechnung mit Hilfe der oben angegebenen Formeln ist es auch bei Radsätzen mit Losrädern möglich, die theoretischen Wendepunkte der Radsatzinuslinie in Abhängigkeit von der Fahrgeschwindigkeit sowie die Erregerfrequenzen zu bestimmen. Diese Werte haben jedoch nur theoretischen Wert, da das Spurkanalspiel mit zunehmender Abnützung (Rad und Schiene) größer wird und dadurch die Wendepunkte der Sinusschwingung nur annähernd bestimmbar sind. Daher ist weiters auch die Erregerfrequenz nur annähernd bestimmbar, sodaß keine exakte Grundlage für die Abstimmung des Federsystems zwischen Fahrwerk und Kabine (ausgenommen der Störfaktoren) gegeben ist. Der eingangs beschriebene Sinuslauf ist also nicht nur für die beschriebene Abnützungsminimierung des Rad-Schiene-Systems (kein punktuelles Einlaufen der Räder) wichtig, sondern auch für die Abstimmung des Federsystems, was sich wiederum auf den Fahrkomfort auswirkt.

Die Aufgabe der Erfindung ist es daher, für Losrad-Fahrwerke ohne starre Achsverbindung zwischen einander gegenüberliegenden Rädern die gleichen Laufcharakteristika zu schaffen, welche für die selbstzentrierenden herkömmlichen Radsätze mit fester Querverbindung zwischen den Rädern Gültigkeit haben.

Diese Aufgabe wird erfindungsgemäß dadurch gelöst, daß oberhalb einer Mindestgeschwindigkeit von 10 km/h, insbesondere bei Geradeausfahrt, die Leistung der Antriebseinheiten einander gegenüberliegender Räder periodisch innerhalb vorbestimmter Bandbreiten erhöht und erniedrigt wird, wobei die Leistungsänderung einander gegenüberliegender Räder gegenphasig erfolgt.

Jedes einzelne angetriebene Rad wird von der zugehörigen Antriebseinheit mit dem von der Fahrgeschwindigkeit abhängigen Drehmoment-Drehzahlprodukt (entsprechend der Leistung) beaufschlagt. Durch einen entsprechenden Steuerbefehl von den jeweiligen Puls-Wechsel-Umrichtern werden die jeweils gegenüberliegenden Antriebseinheiten im Takt-Gegentakt-Rhythmus künstlich in einer entsprechenden Drehzahl-Drehmoment-Umkehrungsphase den Erfordernissen der obigen, durch die Formeln nach Klingel & Heumann definierten Bedingungen des sinusähnlichen Laufes innerhalb einer bestimmten Bandbreite (Spurspielkanal) angepaßt.

Vorzugsweise wird die Fahrgeschwindigkeit gemessen und die Bandbreite und/oder die Frequenz der Leistungsänderung der Geschwindigkeit angepaßt. In einer der Antriebssteuerung zugeordneten Rechnereinheit werden in Abhängigkeit von der gemessenen Fahrgeschwindigkeit die Weglänge der Radsatzsinuslinie und die Erregerfrequenz entsprechend den eingangs angegebenen Formeln bestimmt und der Radsatz in eine sinuslinienförmige Bewegung entsprechend einem konventionellen Radsatz mit starrer Achsverbindung gezwungen. Innerhalb der vorgeschriebenen Bandbreite der Aussteuerung (Schwebung des Drehmoment-Drehzahlproduktes beider Antriebe) ist daher eine vorauseilende bzw. zurückhaltende Antriebswirkung der einander gegenüberliegenden Antriebseinheiten möglich. Durch die spezielle Anordnung und durch angepaßte Federsysteme erfolgt eine von der Fahrgeschwindigkeit abhängige Schrägstellung der Radlaufrichtungen der einander gegenüberliegenden Antriebseinheiten. Dadurch ergibt sich der eingangs erwähnte sinusähnliche Lauf, welcher die Abhängigkeit der System-Erregerfrequenzen zwischen dem Fahrwerk und dem Wagenkasten in Abhängigkeit von der Fahrgeschwindigkeit bestimmt. Entsprechend der eingangs angegebenen Formel wird die Frequenz der Leistungsänderung vorzugsweise direkt proportional der Fahrgeschwindigkeit angepaßt. Dadurch kann das Federsystem genau abgestimmt werden und äußere Störungen wie Gleisfehler usw. treten örtlich auf und werden von den Feder-Stoßdämpfer-Kombinationen der Fahrzeugfederung absorbiert und ausgeschaltet.

Zusätzlich ist es auch möglich, unzulässiges Gleiten bzw. Durchdrehen der Räder bei Anfahr- und Bremsvorgängen zu erkennen und auszuschalten. Gleitvorgänge entsprechen einem raschen Abfall des Drehmoment-Drehzahlproduktes außerhalb der vorbestimmten Bandbreite der Leistungsänderung. Um dies zu erreichen ist gemäß einem zusätzlichen Merkmal der Erfindung vorgesehen, daß die Drehzahl jedes einzelnen angetriebenen Rades ermittelt wird und bei Abweichungen von der aufgrund der bei vorgegebener Leistung erwarteten Drehzahl die Leistung solange verändert wird, bis die erwartete und die ermittelte Drehzahl übereinstimmen. Natürlich kann ein geringfügiges Gleiten bzw. ein Schlupf der Räder zugelassen sein. Dies wird bei der Auslegung der Überwachungseinheit berücksichtigt.

Darüberhinaus kann auch eine Differenz der Raddurchmesser, beispielsweise aufgrund von Fertigungstoleranz der ungleichen Abnützung, erkannt und korrigiert werden. Zu diesem Zweck wird die Drehzahl einander gegenüberliegender angetriebener Räder bei gleicher vorgegebener Leistung ermittelt und im Falle einer sich ändernden Differenz der Drehzahlen die Leistung der Antriebseinheit des schneller werenden Rades vermindert und/oder die Leistung des werdenden Rades erhöht, bis die Drehzahldifferenz bei konstant vorgegebener Leistung der einzelnen Antriebseinheiten konstant bleibt, und daß diesen Leistungswerten die gegenphasige periodische Leistungsänderung überlagert wird.

Gemäß einem zusätzlichen Merkmal der Erfindung wird die aufgrund der periodischen Leistungsänderung entstehende periodische Änderung der Laufrichtung der angetriebenen Räder des Fahrwerkes über mechanische, elektrische oder hydraulische Kopplungseinrichtungen auch allenfalls vorhandenen nicht angetriebenen Rädern des Fahrwerkes aufgezwungen. Geeignete Übertragungssysteme, wie etwa Transversalsteuerungen, gestatten es also, auch für nicht angetriebene Losradsysteme den vorteilhaften Effekt des sinusförmigen Radsatzlaufes zu erreichen.

Die Abhängigkeit derartiger Systeme von der Übertragungsgenauigkeit einer mechanisch-hydraulischen oder elektrischen Steuerung kann zu Resonanzerscheinungen führen, welche jedoch durch geeignete Dämpfer im Fahrzeug-Steuerungs-Gesamtsytem verstimmt werden können.

Bei niedrigen Fahrgeschwindigkeiten (Vmax. 10 - 15 km/h) und/oder bei extremen Abweichungen von der Bandbreite der Leistungsänderung oder auch Schwebungen des Drehzahl-Drehmoment-Produktes etwa bei Durchfahren kleiner Gleisbogenhalbmesser wird die erfindungsgemäße Steuerung des Drehzahl-Drehmoment-Produktes vorzugsweise ausgesetzt.

Abschließend sei noch erwähnt, daß die Antriebseinheiten vorzugsweise aus Getriebe-Elektromotor-Kombinationen bzw. hydrostatischen Antrieben bestehen. Hierbei sind schlupflose Kombinationen mittels Synchronmotoren zwar ideale, jedoch aufgrund der aufwendigen Motorkonstruktion und der dafür notwendigen Baugröße nicht wirtschaftliche Ausführungsformen. Für die modernen Losrad-Fahrwerke, deren Zweck es ist, möglichst niedere Fahrzeugfußbodenanordnungen bei der Konstruktion von Niederflurfahrzeugen zu ermöglichen, werden Drehstrom-Asynchron-Motoren als wirtschaftliche und robuste Antriebsmotoren vorgesehen und von Direkt-Pulswechselumrichtern direkt mit Energie versorgt.

**Patentansprüche**

1. Verfahren zur Steuerung eines Fahrwerks ohne starre Achsverbindungen, bei welchen zumindest zwei einander gegenüberliegende Räder einzeln von separat ansteuerbaren Antriebseinheiten angetrieben werden und wobei während der Kurvenfahrt die Antriebseinheiten der einander gegenüberliegenden Räder mit unterschiedlicher Leistung betrieben werden, dadurch gekennzeichnet, daß oberhalb einer Mindestgeschwindigkeit von 10km/h, insbesondere bei Geradeausfahrt, die Leistung der Antriebseinheiten einander gegenüberliegender Räder periodisch innerhalb vorbestimmter Bandbreiten erhöht und erniedrigt wird, wobei die Leistungsänderung einander gegenüberliegender Räder gegenphasig erfolgt.

2. Verfahren nach Anspruch 1, dadurch gekennzeichnet, daß die Fahrgeschwindigkeit gemessen und die Bandbreite und/oder die Frequenz der Leistungsänderung der Geschwindigkeit angepaßt wird.

3. Verfahren nach Anspruch 2, dadurch gekennzeichnet, daß die Frequenz der Leistungsänderung direkt proportional der Fahrgeschwindigkeit angepaßt wird.

4. Verfahren nach Anspruch 1, dadurch gekennzeichnet, daß die Drehzahl jedes einzelnen angetrieben Rades ermittelt wird und bei Abweichung von der aufgrund der bei vorgegebener Leistung erwarteten Drehzahl die Leistung solange verändert wird, bis die erwartete und die ermittelte Drehzahl übereinstimmen.

5. Verfahren nach Anspruch 1, dadurch gekennzeichnet, daß die Drehzahl einander gegenüberliegender angetriebener Räder bei gleicher vorgegebener Leistung ermittelt und im Falle einer sich ändernden Differenz der Drehzahlen die Leistung der Antriebseinheit des schneller werdenden Rades vermindert und/oder die Leistung der Antriebseinheit des langsamer werdenden Rades erhöht wird, bis die Drehzahldifferenz bei konstant vorgegebener Leistung der einzelnen Antriebseinheiten konstant bleibt, und daß diesen Leistungswerten die gegenphasige periodische Leistungsänderung überlagert wird.

6. Verfahren nach Anspruch 1, dadurch gekennzeichnet, daß die aufgrund der periodischen Leistungsänderung entstehende periodische Änderung der Laufrichtung der angetriebenen Räder das Fahrwerkes über mechanische, elektrische oder hydraulische Kopplungseinrichtungen auch allenfalls vorhandenen nicht angetrieben Rädern des Fahrwerkes aufgezwungen wird.

## Claims

1. Method of controlling a running gear without rigid axle connections in which at least two wheels, lying opposite one another, are individually driven by separately controllable drive units and wherein, during cornering, the drive units of the wheels lying opposite one another are operated with different outputs, characterised in that, above a minimum speed of 10 km/h, particularly when travelling in a straight line, the output of the drive units of wheels lying opposite one another is periodically increased and reduced within pre-determined bandwidths, wherein the output of wheels lying opposite one another is changed in phase opposition.

2. Method according to claim 1, characterized in that the driving speed is measured and the bandwidth and/or the frequency of the change in output is adapted to the speed.

3. Method according to claim 2, characterized in that the frequency of the change in output is adapted in direct proportion to the driving speed.

4. Method according to claim 1, characterized in that the speed of each individually driven wheel is determined and, if it deviates from the speed expected on the basis of the preset output, the output is modified until the expected and the determined speeds tally.

5. Method according to claim 1, characterized in that the speed of driven wheels lying opposite one another are determined for the same preset output and, in the event that the difference in speeds changes, the output of the drive unit of the wheel which is becoming faster is reduced and/or the output of the drive unit of the wheel which is becoming slower is increased until the difference in speed remains constant for a constant preset output of the individual drive units, and that the periodic change in output, in phase opposition, is superimposed over these output values.

6. Method according to claim 1, characterized in that the periodic change in the running direction of the driven wheels of the running gear, which occurs periodically on account of the periodic change in output, is forced onto non-driven wheels of the running gear, which are present if necessary, via mechanical, electrical or hydraulic coupling devices.

## Revendications

1. Procédé pour la commande d'un bogie sans jonction rigide par essieu, pour lequel au moins deux roues se faisant face sont entraînées individuellement par des unités d'entraînement à commande séparée, les unités d'entraînement des roues opposées fonctionnant à des puissances différentes pendant le roulement en courbe, caractérisé en ce qu'au-delà d'une vitesse minimale de 10 km/h, en particulier pour des tronçons de sortie rectilignes, la puissance des unités d'entraînement des roues se faisant face augmente et diminue périodiquement à l'intérieur de largeurs de bande prédéterminées, la variation de puissance des roues opposées s'effectuant en opposition de phase.

2. Procédé selon la revendication 1, caractérisé en ce que la vitesse est mesurée et la largeur de bande et/ou la fréquence de la variation de puissance est adaptée à la vitesse.

3. Procédé selon la revendication 2, caractérisé en ce que la fréquence de la variation de puissance est adaptée de manière directement proportionnelle à la vitesse.

4. Procédé selon la revendication 1, caractérisé en ce que la vitesse de rotation de chaque roue entraînée individuellement est déterminée et, en cas d'écart par rapport à la vitesse de rotation attendue pour une puissance prédéterminée, la puissance est modifiée jusqu'à ce que la vitesse de rotation constatée coincïde avec la vitesse de rotation attendue.

5. Procédé selon la revendication 1, caractérisé en ce que la vitesse de rotation des roues se faisant face est déterminée pour une même puissance prédéterminée et, en cas d'une évolution de la différence des vitesses de rotation, la puissance de l'unité d'entraînement de la roue allant plus vite est diminuée et/ou la puissance de l'unité d'entraînement de la roue allant plus lentement est augmentée, jusqu'à ce que la différence de vitesse de rotation reste constante pour une puissance prédéterminée constante des différentes unités d'entraînement et en ce que la variation de puissance périodique en opposition de phase vient se superposer à ces valeurs de puissance.

6. Procédé selon la revendication 1, caractérisé en ce que le changement périodique du sens de roulement des roues entraînées du bogie, ou éventuellement des roues non entraînées, qui résulte de la variation périodique de puissance, est imposé par l'intermédiaire de dispositifs d'embrayage électrique ou hydraulique.